Europäisches Patentamt

European Patent Office

Office européen des brevets

(19)

(11) **EP 1 407 722 A1**

(12) **EUROPEAN PATENT APPLICATION**
published in accordance with Art. 158(3) EPC

(43) Date of publication:
14.04.2004 Bulletin 2004/16

(51) Int Cl.⁷: **A61C 13/00**, A61C 11/00

(21) Application number: 02746110.2

(22) Date of filing: 16.07.2002

(86) International application number:
**PCT/JP2002/007234**

(87) International publication number:
**WO 2003/007836 (30.01.2003 Gazette 2003/05)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: 16.07.2001  JP 2001215816
25.12.2001  JP 2001392174
22.02.2002  JP 2002046657

(71) Applicant: **Nishihama, Naoki**
**Takarazuka-shi, Hyogo 665-0011 (JP)**

(72) Inventor: **Nishihama, Naoki**
**Takarazuka-shi, Hyogo 665-0011 (JP)**

(74) Representative: **Modiano, Guido, Dr.-Ing. et al**
**Modiano, Josif, Pisanty & Staub,**
**Baaderstrasse 3**
**80469 München (DE)**

(54) **DENTURE BASE AND METHOD OF PREPARING IT AND INSTRUMENT USED THEREFOR**

(57)    A denture base on which an artificial replacement of teeth is implanted, characterized in that the denture base includes a plurality of dentures arranged and fixed in a plastic or metal foundation, wherein the dentures are arranged along with the occlusion curve expressed based on the central point set up on the resultant line showing the radius of curvature R of the optimal row of teeth obtained from the roentgenogram of a patient's temporal areas of the head, and the direction of the standard resultant of the power produced at the time of occlusion.

Fig. **1**

**Description**

Technical Field

The present invention relates generally to a denture base, a method of preparing denture bases, and denture base components. More particularly, the present invention relates to a denture base used in treating dental diseases such as dentulous jaw and multi-teeth coloboma, a method of preparing such denture bases, and denture base components immediately used in making denture bases.

Background Art

In treating denture base and implanting dentures to cure edentulous jaw, multi-teeth coloboma, etc., it is essential to give exact occlusion in the treatment of dentures and brimed teeth.

In order to give exact occlusion, the common practice is that dental doctors and denturists analyze the anatomical form and average value of hard tissue of each patient, and recognize his or her individual digestive movement of lower jawbone in the mouth with the help of virtual base lines and planes of the mouth and the circumference thereof. In practice, the dental doctors and denturists use those generally applicable data, and reconstruct patients' occlusion on the individual basis.

The reconstruction of the occlusion of each patient mainly depends upon the doctor's or denturist's individual skills. The dependence of practitioners' individual skills has made it difficult to quantitatively collect the data about occlusion ideal for each patient set up a standard of what occlusal force and its strength are ideal for each patient. Because of lack of the standard applicable to patient by patient, it is time and labor-consuming to make a denture base which can satisfy patients, such as those suffering from edentulous jaw.

Therefore, an object of the present invention is to provide a denture base and a method of making same which enables the achievement of exact occlusion in a relatively short period of time with the least toil by utilizing the resultant of actual occlusal forces.

SUMMARY OF THE INVENTION

According to the present invention, the denture base includes a plurality of dentures arranged and fixed in a plastic or metal bed, wherein the dentures are arranged along with the occlusion curve expressed based on the central point set up on the resultant line showing the radius of curvature R of the optimal row of teeth obtained from the X-ray of a patient's both temporal areas of the head, and the direction of the standard resultant of the power produced at the time of occlusion.

The standard resultant line is preferably a line connecting between a point set at the forward center of the patient's frontal sinus on the X ray and a lower jaw angle.

According to another aspect of the present invention, the method of making the above-mentioned denture base includes the steps of making a denture base foundation to a pattern taken from the patient's mouth patient by patient, and preparing a denture portion obtained through a separate process on which a required number of dentures are fixed on the denture base foundation on the basis of individual data, especially with a radius of curvature R which is proper to each patient.

According to another aspect of the present invention, the method is more simplified by making a denture base to be fixed in the patient's jaws to a pattern taken from his or her mouth, and then fixing he dentures on the denture base in such a manner not to spoil the patient's facial look. More specifically, individual radii of curvature are determined from the dentures, and a suitable denture set is previously selected in accordance with the size of the denture base depending upon the individual radius of curvature obtained as mentioned above, and permanently fixed there.

Preferably, the denture base component includes a radius of curvature R curve, as an occlusion curve, whose center is on the resultant line, and displaceable with ages toward the lower jaw, the dentures being arranged and fixed along the occlusion curve.

Different types of denture base components are prepared from different occlusion curves, and an ideal one is selected for a particular patient, and is fixed on a model obtained from the model of the patient's mouth, thereby simplifying the process of making denture bases in a short period.

An occlusion curve is set by using the direction of a resultant curve of the patient's occlusal forces, and the expected dentures are fixed along the occlusion curve. This procedure is advantageous in that no detrimental moment occurs between the upper and lower jaws and the teeth therebetween. Thus, the process of making the denture bases effecting ideal occlusion for each patient.

The present invention provides a method of preparing denture bases which includes the steps of representing a resultant line of the patient's occlusal forces on a roentgenogram taken from the patient, setting a central point of a radius of curvature of the occlusion line on the resultant line, representing an occlusion curve on a occlusal model, the occlusion curve having a radius equal to a distance between the central point and the occlusion line, and fixing dentures along the occlusion curve.

The resultant line is formed by a line connecting the front of the patient's frontal sinus appearing on the roentgenogram and the lower jaw angle, and the resultant line is used to draw the occlusion curve.

The articulator according to the present invention can be any type provided that it can three-dimensionally draw an occlusion curve ideal for patients on the occlusion model; basically, it includes a model support, and an arm capable of drawing a desired occlusion curve, the arm being three-dimensionally rotatable.

More specifically, the articulator of the present invention includes a base, a stand erected on the base, a lower jaw support attached to the base, a rotary member rotatably fixed to the stand, an upper jaw support provided at the front of the rotary member, a rod vertically inserted through the rotary member, a pendulum-like arm whose length is adjustable, the arm being pivotally supported on the upper end of the rod in a three-dimensionally rotatable manner, a projecting pawl fixed to a free end of the arm, thereby ensuring that the pawl of the arm is brought into contact with a model of the upper jaw support and lower jaw support, and by rotating the arm, the pawl three-dimensionally draws an occlusion curve on a wax rim of the model, wherein the occlusion curve has a radius of curvature equal to an effective length.

Preferably, each of the upper jaw support and the lower jaw support is axially adjustable.

Preferably, the face bow support capable of mounting the face bow on the articulator at a predetermined position.

The articulator of claim 12 or 13, wherein the pair of arm and pawl comprise a plurality of pairs selectably fixed to the rods.

The face bow used in the present invention includes a base provided near the patient's mouth, a pair of arms transversely extending from the base, the tip ends of the arms being engaged with the patient's ears, wherein the base is provided with a wax rim support axially adjustable.

As is evident from the foregoing description, the feature of the present invention is in the achievement of an ideal occlusion curve reproduced on the model obtained from each patient's roentgenogram. In this way each patient can enjoy his or her ideal denture bases which offer agreeable occlusion.

BRIEF DESCRIPTION OF THE DRAWINGS

Fig. 1 is a perspective view of an articulator according to the present invention;
Fig. 2 is a side view of the articulator shown in Fig. 1;
Fig. 3 is a plan view of the articulator shown in Fig. 1;
Fig. 4 is a plan view of the articulator shown in Fig. 1;
Fig. 5 is a rear view of the articulator shown in Fig. 1;

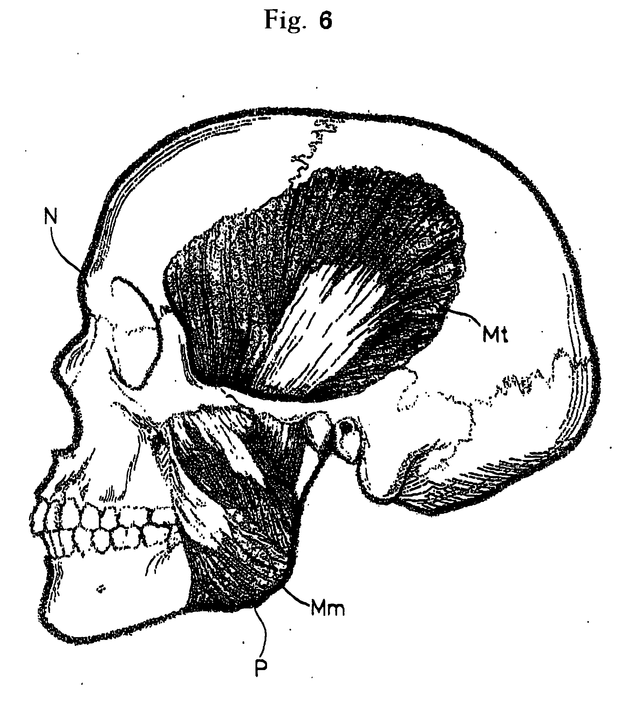

Fig. 6 is a sketch showing a side of the skull of a patient;
Fig. 7 is a sketch two-dimensionally showing a resultant of occlusal force in two dimensions;
Fig. 8 is a sketch exemplifying a resultant and an occlusion curve of occlusal forces;
Fig. 9 is a front view of the skull shown in Figs. 6 to 8 to show the direction of an occlusal force;
Fig. 10 is a diagram three-dimensionally showing a occlusal force acting at the time of occlusion;
Fig. 11(a) is a plan view showing a unit of arranged teeth;
Fig. 11(b) is a perspective view of the unit show in Fig. 11(a);
Fig. 12 is a plan view of a denture base;
Fig. 13 is a perspective view of a face bow;
Fig. 14 is a plan view showing a main portion of the face bow shown in Fig. 13; and
Fig. 15 is a perspective view of the face bow in actual use.

DETAILED DESCRIPTION OF THE DRAWINGS

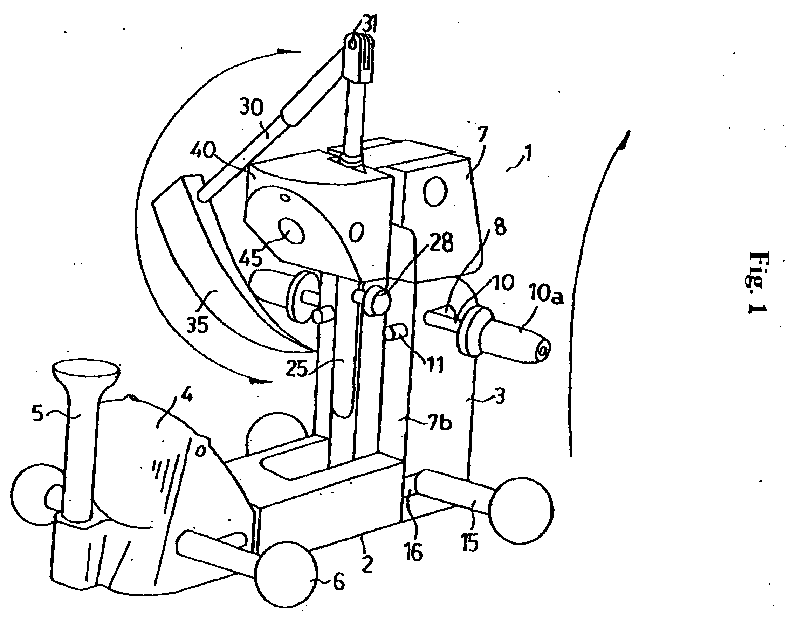

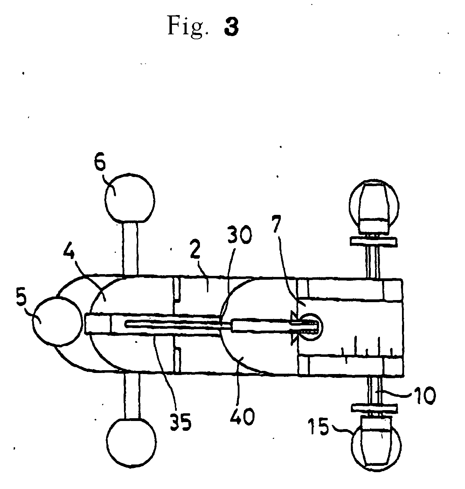

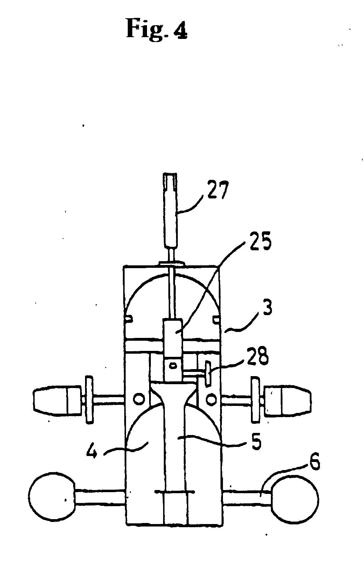

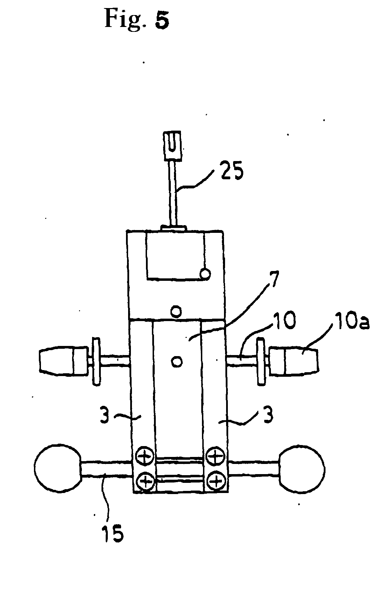

Referring to Figs. 1 to 5, an articulator 1 embodying the present invention includes a base 2, a stand 3 erected on the base 2, and a face bow support 5 on the opposite side of the stand 3. In this specification the 'axial' means the direction of the long axis of the articulator, and the 'transverse' or 'crosswise' means the direction intersecting the axial direction at right angle.

A lower jaw support 4 is attached to the base 2 such that it is axially adjustable, and can take a proper axial position and a proper angular position with respect to the central axis of the articulator 1. The positional adjustment of the support 4 is effected by a handle 6. The face bow support 5 is integral with the face bow support 4, thereby ensuring a unitary movement in the axial direction.

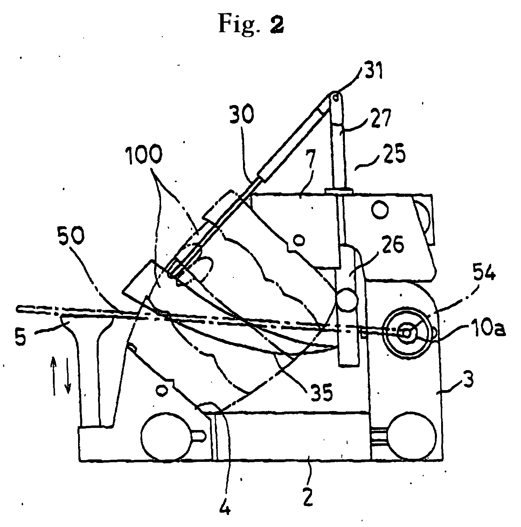

The support 3 includes a pair of sidewalls on the right and left of the axis of the articulator 1. A rotary member 7 is provided in a space between the sidewalls of the support 3 in such a manner that it is rotated by an axle 10. As shown in Figs. 1 and 2, the rotary member 7 is rotated from its level state into a clockwise direction in Figs. 1 and 2 around the axle 10 and is fixed at 45° and 90°. For this reason, it is convenient for attachment and detachment of the below-mentioned upper jaw model. Knobs 10a are fixed to the opposite ends of the axle 10, wherein the knobs 10a take a position corresponding to the patient's jaw joint. The axle 3 is inserted in a slot 8 axially extending, so that the axils 3 can slide axially.

Each of the knobs 10a can be provided with a member engageable with the ear of a face bow. Two bolts 11 are provided to limit the axial position of the axle 10, and bias the axle 10 under the action of a spring housed in the slot 8.

The rotary member 7 has its upper portion bent frontward, and a leg 7b in its lower part. The leg 7b is limited from its rearward movement by a shaft 15 whereby the rotary member 7 is restrained from its full rotation, thereby maintaining that the rotary member is maintained at a vertical angle as predetermined.

The shaft 15 is constantly biased rearward under the action of the spring housed in the slot 8. The rotary member 7 is loaded with an upper jaw model, and therefore, it is urged counterclockwise Fig. 1 but its rotatable movement is restrained by the axle 15.

A rod 25 is vertically inserted through the rotary member 7. The rod 25 has a double structure which consists of an outer sleeve 26 and a middle sleeve 27 which is vertically adjustable and rotatable around the axis. The middle sleeve 27 is provided with an arm 30 in its upper section such that it is vertically rotatable around a pin 31. Reference numeral 28 designates a screw whereby the outer sleeve 26 and the middle sleeve 27 are joined together.

The arm 30 is adjustable in length, having a pawl 35 at its free end, and the arm 35 can be attached to any arm 30 of different shape and size. It is preferred that arms 30 (with a pawl 35) of different lengths are prepared so as to select a suitable one depending upon the patient's age and body size.

The rotary member 7 is provided with an upper jaw support 40 at its frontward end, wherein reference numeral 45 designates a magnet made of iron piece whereby a jaw model is attracted thereon.

The articulator 1 operates as follows:

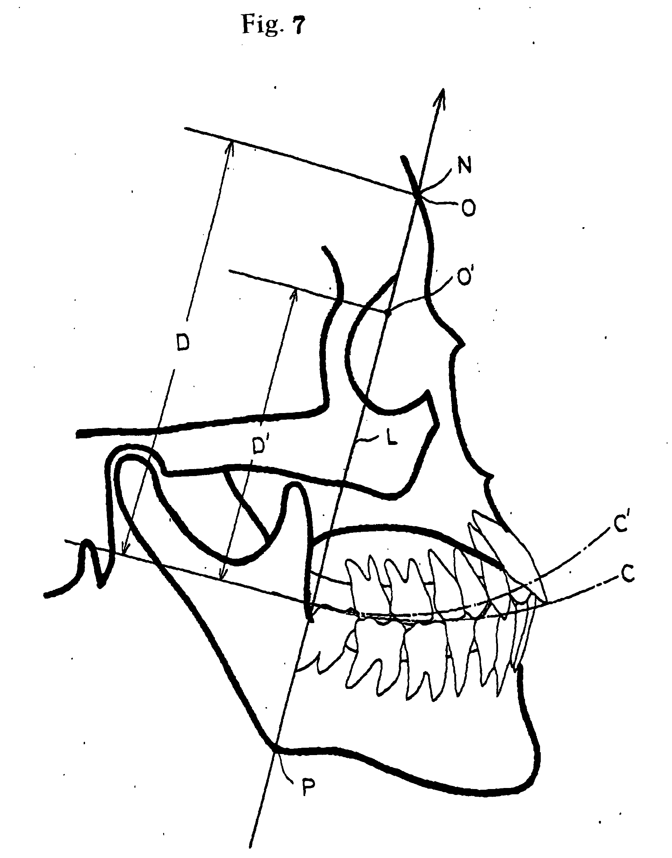

The feature of this articulator 1 is in the achievement of occlusion based upon a resultant occlusal forces. In other words, the tissue worked at occlusion consists of masculus masseter (Mm) and masuculus temporlis (mt). The force produced by them is expressed in vector possessing direction and magnitude. It has been discovered that these resultants differ with patients but as shown in Figs. 7 to 9, it is directed toward a point (N) in the neighborhood of the front edge of the frontal sinus (immediately above the nasion).

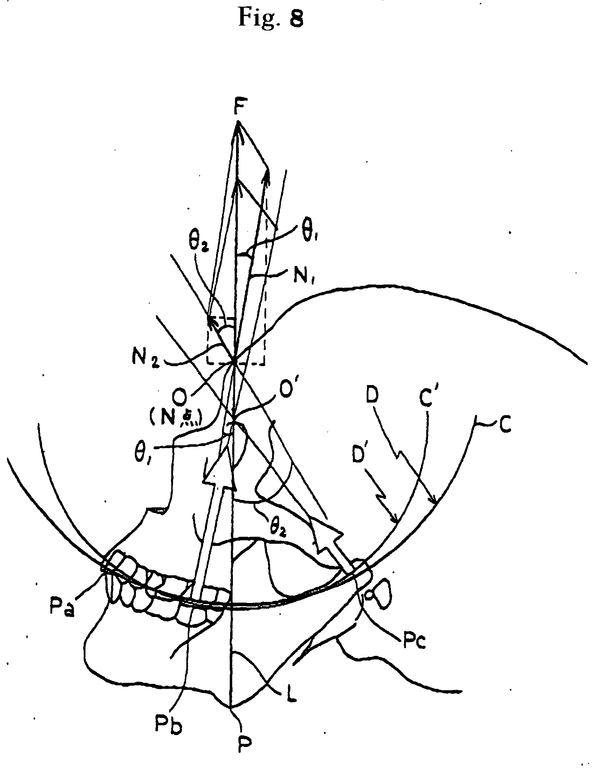

In Fig. 8 Pa is a point of occlusion of the front teeth, and Pb is a point of occlusion of the back teeth, and Pc is a point of arthrotome. The occlusal force $N_1$ acting on the Pb of the back teeth, and the occlusal force $N_2$ acting on the Pc are in vector possessing the direction shown in Fig. 8, and the relationship between these occlusal forces and their resultant F is expressed by the following equation:

$$N_1 \sin \theta_1 = N_2 \sin \theta_2$$

$$N_1 \cos \theta_1 + N_2 \cos \theta_2 = F$$

However, the resultants of all patients' occlusal forces do not concentrate toward the point 0 (Point N), but they differ with the conditions of aging bones. Generally, the resultant of occlusal forces gradually concentrates toward the point P on and along the line L (called "resultant line" or "vector axis") connecting the point N to the point P of lower jaw angle. This state is diagrammatically illustrated in Fig. 7. It will be understood from Fig. 7 that the "should-be" point 0 (N) is displaced to the point 0' because of aging, thereby causing the radius of curvature D of the occlusal curve to change to D', and the arc C to change to C'.

If a circle is drawn centering about a point on the resultant line L, whose position differs from patient to patient, it will be supposed that the ideal occlusal points gather on the line L. The point is relatively easily found from the row of the patient's remaining teeth and a roentgenogram. The present invention is based upon this discovery, and is to teach that the denture bases should start from the preparation of the arc, thereby ensuring an exact, ideal occlusion for patients.

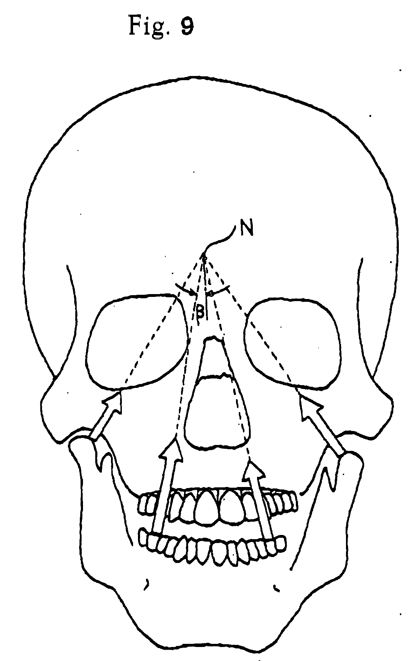

Practically, since each of the occlusal forces acts three-dimensionally as shown in Fig. 9, the axes of teeth should comply with the direction of the occlusal forces.

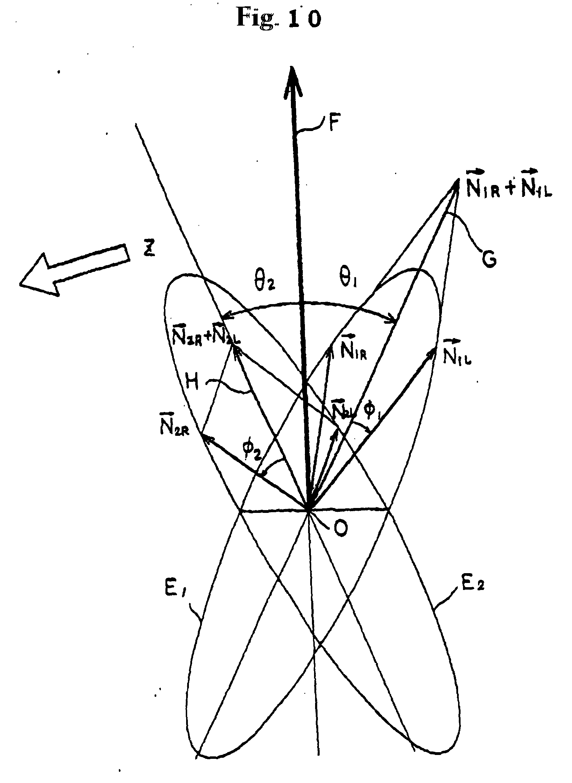

Each occlusal force acts at the time of occlusion as shown in Fig. 10 in the following relationship:

$$|\vec{N}_{1R}+\vec{N}_{1L}|=2N_1\cos\phi_1 \qquad \cdots(1)$$

$$|\vec{N}_{2R}+\vec{N}_{2L}|=2N_2\cos\phi_2 \qquad \cdots(2)$$

$$|\vec{N}_{1R}|=|\vec{N}_{1L}|=N_1 \qquad \cdots(3)$$

$$|\vec{N}_{2R}|=|\vec{N}_{2L}|=N_2 \qquad \cdots(4)$$

$$2N_1\cos\phi_1\cdot\sin\theta_1=2N_2\cos\phi_2\text{ and }\sin\theta_2 \qquad (5)$$

$$2N_1\cos\phi_1\cdot\cos\theta_1+2N_2\cos\phi_2\cdot\cos\theta_2$$
$$=F \qquad (6)$$

where the arrow Z in Fig. 10 indicates the front. The subscripts R and L in the equations indicate the right and the left. The angle made by the vector $N_{1R}$ and $N_{1L}$ is expressed as 2 x $\phi_1$. Among the two circles $E_1$ and $E_2$, the former is a circle containing two teeth and N point O, and the latter is a circle including a jaw joint and the point O. $\theta_1$ and $\theta_2$ each are projected angles. The line L representing the resultant F is a vertical line, and the line H representing the sum of its own, the line G indicating the sum of vector $N_{1R}$ and vector $N_{1L}$ and vector $N_{2R}$, and vector $N_{2L}$ is in the vertical plane which all divides the skull into the right and left.

Since the length of the resultant line L measured from the roentgenogram of patient's temporal areas of head is two dimensional, it is desirable to rectify and use it as a three-dimensional length. This operation can be easily rectified using the angle β from the length of the two-dimensional line L, and the central line of a head as Fig. 9.

A practical process of making a denture base for a particular patient utilizing the above-mentioned principle will be described:

First, a side photograph (cephalo-standard photograph) of a patient's head is taken. Then, a foundation for the denture base is made in a known way; that is, the pattern of the patient's upper and lower gums is impressed on a tray filled with an impressing agent, and gypsum is poured onto the mold to obtain a plaster model. A bed of resin is made on the plaster model. Finally, an upper and lower alveolar rims (wax rims) is fabricated.

The wax rim is put into the patient's mouth, and the patient is requested to bite so as to fix a central position of the upper and lower jaws. While the wax rims are bitten, the wax rims are joined together with wax. In this state, the affinity between the wax rims and the cheek mucosa and the outward appearance are checked and may be remedied.

The joined wax rims are brought into contact with the plaster model, and provisionally fixed together. It is mounted on the articulator 1 by use of the face bow 50.

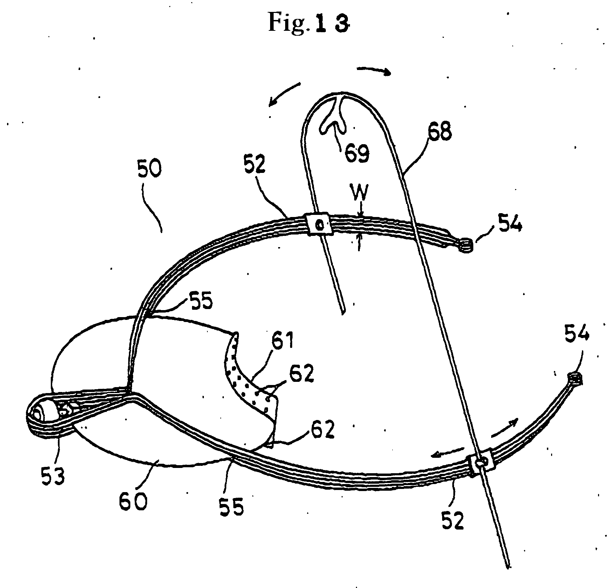

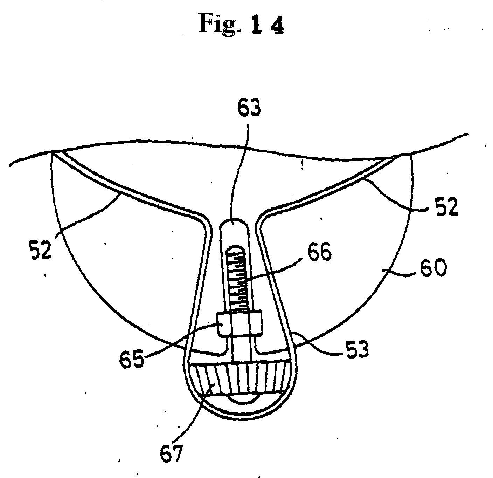

As shown in Figs. 13 to 15, the face bow 50 includes a pair of arms 52 and 53 of resilient material, such as metal, extending rightward and leftward, wherein the branch portion of the arms constitutes a base 53. Accordingly, the arms 52, 53 and the base 53 are in one piece. Preferably, a plurality of metal bars are bent together. Alternatively, a metal plate having a width of a few millimeters to a few tens of millimeters can be used. The base 53 is substantially U-shaped, and projects frontward. The base 53 is additionally provided with a wax rim provided in a patient's mouth.

The arms are provided with engagers 54 at each top end whereby the arms are fixed near the ear canals. The base 53 includes a slit 55 in which a wax rim support 60 is slidably fixed.

The wax rim support 60 consists of a virtually circular metal plate (alternatively, plastics or any other can be used), and a rim on a fixed part 61 designed to fix the wax rim thereto. This fixed part 61 consists of a rim of the metal plate which adhered to a recess of the wax rim support 60 at right angles. The rim is provided with a plurality of pinholes 62. Te wax rim support 60 includes a groove 63 cut toward the center, and a nut 65 is welded near the port of the groove 63.

The nut 65 is provided with a bolt 66 having a knob 67 which is slidable on the inside of the base 53. The bolt 66 is rotatable but cannot move in the axial. Therefore, the turning of the knob 67 causes the wax rim support 60 to move for adjustment.

It is noted that the wax rim support 60 is not limited to the illustrated embodiment, and can be variously modified.

The face bow 50 is provided with an arch member 68 by means of a pivot 68a, so as to measure an angle between the two lines; namely, the line connecting the base 54 and the wax rim support 60 and the resultant line L. The arch member 68 is provided with an engager 69 to be fixed between the patient's eyebrows (the root of his or her nose). When it is fixed, the apex of the arch member 68 is exactly located on the point N.

The face bow 50 is operated as follows:

First, the wax rim 100 is placed in the patient's mouth, and he or she is requested to bite it, so as to decide a central position of the upper and lower jaws. While the wax rims are bitten, they are joined together with wax. In this state, the affinity between the wax rims and the cheek mucosa and the outward appearance are checked and may be remedied. In this way, the wax rims are fixed to the face bow 50. In order to fix them, the fixed portion of the wax rim support 60 is pushed to the front of the wax rims in the patient's mouth, and pins are inserted into the pinholes 62 in the rims.

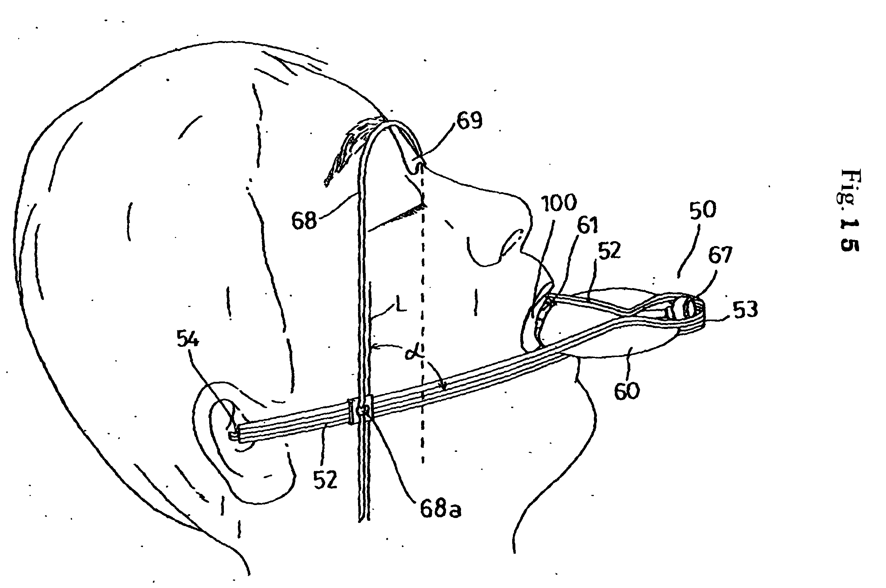

The joined wax rims are set in the articulator 1 by use of the face bow 50. Before the setting is done, the angle to the vector axis (resultant line) of the face bow 50 is measured. As shown in Fig. 15, there is set a projected line L which connects the point N on the patient's head and the lower jaw angle (in the illustrated example, a projected line of the arch member 68). As the last step, the angle between the face bow 50 mounted on the patient and the line is measured (in the illustrated example, the angle $\alpha$ to the projected line L).

In this case, it is important that the angle (i.e. the angle in the exact side view of a skull) taken at right angles to the sagittal plane of a skull (the halved sections of a skull) is measured. For this reason, it is desirable to measure the angle correctly by an instrument suitable for exposing a sagittal plane; for example, an instrument which can expose a sagittal plane using the point N positioned at the center of the patient's face and jaw joint near the ears. The sagittal plane obtained in this way can be effectively utilized to measure the angle accurately.

Referring to Fig. 2, the face bow 50 (the plaster model is omitted) set in the articulator 1 is provided with engagers 54 fixed to the jaw joints (the top ends 10a of the axis 10), and the height of the face bow support 5 is adjusted so as to cause the face bow 50 to face the rod 25 at a predetermined angle (the previously measured angle $\alpha$). The jaw joint is ear the ears, so that it is easy to rebuild the set for individual patients.

The axis 10 is provided with holes adapted for insertion of the engagers 54 of the face bow 50. In practice, the face bow 50 is fixed by dint of the resiliency of the arm 52. If the resiliency is insufficient, and the fixture is found unstable, any device such as rubber bands, can be used to bias the arms toward each other. In the articulator 1 the resultant line or the vector axis is expressed by a vertical rod 25, thereby enabling the face bow 50 to stand at the angle $\alpha$, where the angle of the face bow is almost at right angle to the vector axis. As a result, when a plaster model loaded with wax rims is set in the articulator 1, the rims of the model is kept horizontal, thereby facilitating the subsequent operations. After the angle of the face bow 50 is adjusted, the plaster model is shifted to the articulator 1 with this adjusted angle maintained, and fixed thereto. Then, the face bow is removed.

On the other hand, the resultant line L which connects the point N (point that the resultant directs) and the point P of a lower jaw angle is written on the cephalophotograph obtained beforehand. In this way a patient's occlusion curve (curve which passes along an occlusion point) is obtained, and the center O of the occlusion curve is set on the resultant line L. Then, the distance D (radius of the occlusion curve) between the center O and the patient's occlusion curve (the radius of the occlusion curve) is measured by a cephalophotograph, and the arms 30 and the pawl 35 are adjusted so that the measured D can be transferred to the model.

A curve is drawn by the pawl 35 of the tip end of the arm on the wax rims of the plaster model in which the upper and lower jaws are unified into one piece. At this stage, the axle 25 supporting the arm 30 is kept rotatable, thereby enabling the arm to rotate around the axis 31. In this way, a three-dimensional arc can be drawn. The axis 31 supporting the arm corresponds to the point N, and the drawn arc represents the patient's occlusal curve. The arm 30 can be fixed in a three-dimensionally rotatable manner by means of an adjustable coupler.

The skull of a patient differs from patient to patient. Taking this difference into consideration, it is necessary to adjust the length of the arm 30, the shape and size of the pawl 35 (a plurality of pawls can be prepared, and be replaced when necessary), the axial position and vertical declining angle of the rotary member 7, the axial position of the lower jaw support 4, and the axial position of the upper jaw 40, so as to achieve occlusion ideal for each patient.

The upper and lower wax rims are vertically divided along the drawn occlusion curve, and then a denture is implanted one by one along the arch-shaped wax rim. More specifically, the dentures for the upper jaw are first placed on the wax rim for the lower jaw, and provisionally fixed. The wax rim for the upper jaw is cleansed with hot water, and its resin base is exposed. The gap between the denture row and the resin base is temporarily kept as it is, and then, the upper jaw is removed from the articulator 1, and the gap is filled with resin so as to effect the integration of the denture rows.

The denture row of the lower jaw is fixed, but this fixture should be done in agreement with the upper jaw. The procedure is the same as that described above about the upper jaw. Thus, a denture base incorporating the unified base and the denture row is obtained. This denture base is finished into products, wherein it is polished if necessary.

In the embodiment described above, the arch-shaped curve for the denture row is based on the cephalophotograph of a patient's head. Alternatively, a more simplified method is also possible:

The alternative method does not use a cephalophotograph, and a few dentures are provisionally fixed to the upper and lower alveolus rims transferred from the patient's mouth, and the patient is requested to bite it to ascertain the optimum height and angle for the dentures. When an ideal occlusion is found, a regular occlusion curve is obtained in accordance with the few dentures.

The procedure is the same as that of the case of the above-mentioned upper jaw almost. Thus, the denture base which the floor and the denture sequence unified is obtained. Finish processing of polish required for this denture base etc. is performed, and it is considered as a product.

In this way, based upon the jaw model taken from the patient's mouth, the foundation for the denture base to be fitted in his or her jaws is first fabricated. Then, a plurality of dentures suitable for the patient are implanted in place in his or her mouth, and a particular radius of curvature is determined by referring to the plurality of dentures. The radius of curvature obtained is utilized to draw an arch-shaped curve on the rims, and unify the denture rows in one piece to obtain the expected denture base. The measurement and the determination of the arch-shaped curve can be effected by the arms and pawl of the articulator.

The manufacture of denture bases basically is time- and labor-consuming, and requires a complicated procedure, because of the fact that a lot of dentures must be fixed on the wax rims along the occlusal curve. According to the present invention, a simplified method will be provided:

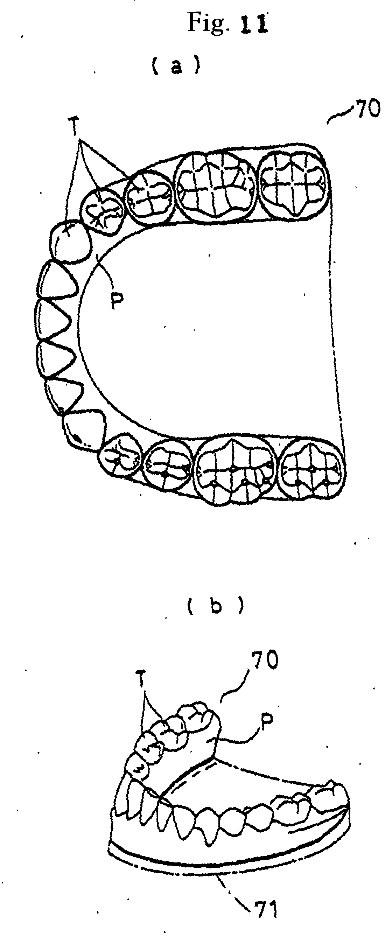

A denture base component 70 set on the foundation along the occlusion curve is prepared. Fig. 11 shows a denture row component 50 which is a member of the denture base component 70, having dentures T arranged and fixed on the rim P.

The occlusion curve used for the denture base component 70 differs with the patient's age and physique, and the dentures have a variety of types. In order to enable patients to have a good choice of their dentures, it is desired that more kinds of dentures should be stocked but two many kinds require a large warehouse, and the inventory increases, and the maintenance is costly. The optimum number of specimens is preferably a few tens; 30 to 50 kinds are recommendable.

The patient can select one from the stocked denture base component as they like. The selected denture row component is set on the foundation 60 (indicated by the chain line in Fig. 11) fabricated in accordance with the model taken from the patient's mouth. In this case, a denture row selected from the prepared variety of kinds has a curve suitable for the patient's occlusion curve is set on a curve passing through a point on the center of the arthrotome or a point 2 to 3mm away from it toward the external auditory meatus, and a line three-dimensionally intersecting the tooth bow face determined in the patient's mouth, and fixed on the foundation. The procedure is as follows:

First, the model having the vertically halved wax rims is set in the articulator 1 along the occlusion curve, and the upper denture row component 50 is set in agreement with the lower teeth.

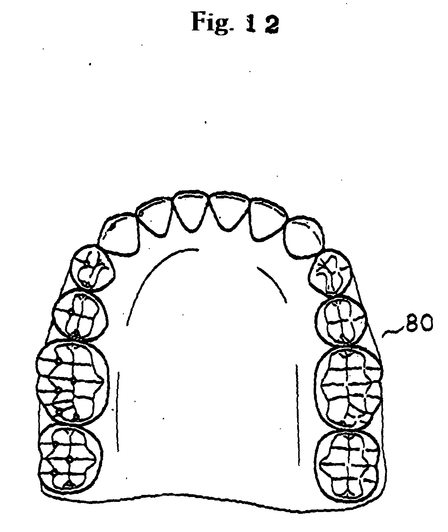

Then, the upper wax rim gets rid of the wax, and the gap between the plastic foundation and the denture row component 70 placed near the lower jaw is filled with high quality instantly polymerizable resin except for the upper plastic foundation 71 itself. In this way, the unified plastic foundation and denture row as shown in Fig. 12 is obtained as the denture base 80.

As a major advantage of the present invention, the improved method of preparing a denture base dispenses with the necessity of implanting dentures in the foundation 60 fabricated in accordance with the shape of the patient's mouth. This is very economical and labor-saving. The prepared denture rows are implanted along the occlusion curve drawn in accordance with the vector of the patient's occlusal force. The resulting denture base is ideal for the patient.

INDUSTRIAL APPLICABITY

As is evident from the foregoing description, the present invention can efficiently make denture bases ideal for individual patients. In the foregoing description a denture base of plastics, but the material is not limited to it. The denture base can be made of metal without any modification. The articulator of the present invention employs a three-dimensionally rotatable arm, and the patients' occlusion curve taken from their roentgenogram can be reproduced on the model, thereby simplifying the process of making denture bases.

**Claims**

1. A denture base having a plurality of dentures implanted in row on a foundation of plastics or metal, **characterized in that** the dentures are arranged along the occlusion curve expressed in accordance with the radius of curvature R of an ideal denture row obtained from roentgenogram of the patient's temporal regions, and a center set on a resultant line of the patient's occlusal forces.

2. The denture base of claim 1, wherein the resultant line is a line connecting a central point of the front of the frontal sinus in the roentgenogram and the lower jaw angle.

3. The denture base of claim 1 or 2, wherein the central point of the occlusion curve is displaceable toward the lower jaw angle with age.

4. A denture base component used in making denture bases, **characterized in that** it is set on a rim of foundation material having denture rows along the occlusion curve drawn in accordance with a curve of a radius of curvature R whose central point is displaceable toward the lower jaw angle with age, on the resultant line representing the direction of resultant of occlusal forces.

5. A method of preparing denture bases, comprising the steps of representing a resultant line of the patient's occlusal forces on a roentgenogram taken from the patient, setting a central point of a radius of curvature of the occlusion line on the resultant line, representing an occlusion curve on a occlusal model, the occlusion curve having a radius equal to a distance between the central point and the occlusion line, and fixing dentures along the occlusion curve.

6. The method of claim 5, wherein the resultant line is formed by a line connecting the front of the patient's frontal sinus appearing on the roentgenogram and the lower jaw angle, and the resultant line is used to draw the occlusion curve.

7. A method of preparing a denture base, comprising the steps of obtaining a model taken from the patient's mouth, making a foundation for a denture base to be attached to the patient's mouth, preparing a denture base component having the expected dentures fixed on rims made on the foundation, and fixing the denture base component on the foundation in accordance with a predetermined radius of curvature.

8. A method of preparing a denture base, comprising the steps of obtaining a model taken from the patient's mouth, making a foundation for a denture base to be attached to the patient's mouth, obtaining a radius of curvature in accordance with the dentures by fixing the expected dentures on the patient's upper jaw rims, fixing a selected denture base component having the expected dentures in place in the patient's mouth in accordance with the size of an arch-shaped curve drawn with the radius of curvature.

9. The method of claims 7 or 8, wherein the denture base component comprises a denture row on a resultant line of the patient's occlusal forces, and arranged along an occlusion curve of radius of curvature R whose center is displaceable toward the lower jaw angle with age.

10. The method of claim 7 or 8, further comprising the steps of preparing different types of denture base components, selecting one ideal for the patient's occlusion curve, placing the selected denture base component on a line three-dimensionally intersecting a tooth bow surface characteristic of the patient's mouth, and fixing the selected component on the foundation.

11. A method of preparing denture bases, comprising the steps of preparing a base portion to be arranged in the patient's mouth, providing a pair of arms whose tip ends are engageable with points near his or her ears, preparing a face bow by providing the base portion with a wax rim support insertable into the patient's mouth, engaging the pair of arms with around the patient's ears, arranging the base portion in the patient's mouth, fixing the wax rims to the wax rim support axially adjustable, drawing a projected line of the resultant on the patient's temporal areas, wherein the resultant line connects a central point of the front of the patient's frontal sinus and the lower jaw angle, obtaining the angle of the face bow to the projected line, fixing the face bow to the articulator, drawing an arch-shaped curve on the wax rims, wherein the arch-shaped curve has a point set on the resultant line as its central point to constitute the denture row along the arch-shaped curve.

12. An articulator comprising a support for an occlusion model, and an arm three-dimensionally rotatable, the arm being capable of representing an occlusion curve on an upper jaw model and a lower jaw model each supported on the support.

13. The articulator of claim 12, further comprising a base (2), a stand (3) erected on the base (2), a lower jaw support (4) attached to the base (2), a rotary member (7) rotatably fixed to the stand (3), an upper jaw support (40) provided at the front of the rotary member (7), a rod (25) vertically inserted through the rotary member (7), a pendulum-like arm (30) whose length is adjustable, the arm being pivotally supported on the upper end of the rod (25) in a three dimensionally rotatable manner, a projecting pawl (35) fixed to a free end of the arm (30), thereby ensuring that the pawl (35) of the arm (30) is brought into contact with a model of the upper jaw support and lower jaw support, and by rotating the arm, the pawl three-dimensionally draws an occlusion curve on a wax rim of the model, wherein the occlusion curve has a radius of curvature equal to an effective length.

14. The articulator of claim 12 or 13, wherein each of the upper jaw support and the lower jaw support is axially adjustable.

15. The articulator of claim 12 or 13, further comprising a face bow support (5) capable of mounting the face bow on the articulator at a predetermined position.

16. The articulator of claim 12 or 13, wherein the pair of arm and pawl comprise a plurality of pairs selectively fixed to the rods.

17. A face bow comprising a base (53) provided near the patient's mouth, a pair of arms (52) transversely extending from the base (53), the tip ends of the arms being engaged with the patient's ears, wherein the base (53) is provided with a wax rim support (60) axially adjustable.

# Fig. 1

Fig. **2**

Fig. **3**

Fig. 4

Fig. **5**

## Fig. 6

## Fig. 7

## Fig. 8

Fig. **9**

# Fig. 1 0

## Fig. 11

### ( a )

### ( b )

Fig. 1 2

Fig.**13**

Fig. 1 4

Fig. 1 5

## INTERNATIONAL SEARCH REPORT

| | International application No. |
|---|---|
| | PCT/JP02/07234 |

| A. | CLASSIFICATION OF SUBJECT MATTER |
|---|---|
| | Int.Cl⁷ A61C13/00, A61C11/00 |

According to International Patent Classification (IPC) or to both national classification and IPC

| B. | FIELDS SEARCHED |
|---|---|

Minimum documentation searched (classification system followed by classification symbols)
   Int.Cl⁷ A61C13/00, A61C11/00

Documentation searched other than minimum documentation to the extent that such documents are included in the fields searched

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 6062860 A   (H. GRANT JPRGENSON), 16 May, 2000 (16.05.00), Full text & CA 2109768 A | 1-16 |
| A | US 5807102 A   (Kaltenbach & Voigt), 15 September, 1998 (15.09.98), Full text & JP 7-194629 A | 1-16 |
| X | US 4034474 A   (Robert L. LEE), 12 July, 1977 (12.07.77), Full text & JP 54-41596 A | 17 |

| ☐ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 October, 2002 (28.10.02) | 12 November, 2002 (12.11.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

International application No.

PCT/JP02/07234

---

**Box I Observations where certain claims were found unsearchable (Continuation of item 1 of first sheet)**

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

---

**Box II Observations where unity of invention is lacking (Continuation of item 2 of first sheet)**

This International Searching Authority found multiple inventions in this international application, as follows:
Whereas a denture base in claims 1-3, denture base-use components in claim 4, a method of preparing a denture base in claims 5-11, and an articulator in claims 12-16 have a technical feature of capable of arranging a denture on a denture base along an occlusion curve represented based on the radius of curvature of a dentition and the center point set on a resultant force line of forces produced at occluding, a face bow in claim 17 does not have such a technical feature.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☐ No protest accompanied the payment of additional search fees.

---

Form PCT/ISA/210 (continuation of first sheet (1)) (July 1998)